# EUROPÄISCHE PATENTSCHRIFT

(11) **EP 0 788 948 B1**
(45) Veröffentlichungstag und Bekanntmachung des Hinweises auf die Patenterteilung: **06.07.2005**
(21) Anmeldenummer: 96112590.3
(22) Anmeldetag: 03.08.1996
(51) Int. Cl.: B60R 25/04, E05B 49/00

(54) **Verfahren zur Verbesserung des Diebstahlschutzes von Kraftfahrzeugen mit einer elektronischen Wegfahrsicherung**
Method for improving the anti-theft protection of vehicles equiped with an electronic immobilizer
Procédé pour améliorer la protection anti-vol des véhicules équipés avec un dispositif électronique d'immobilisation

(30) Priorität: 16.09.1995 DE 19534416; 08.12.1995 DE 19545830
(43) Veröffentlichungstag der Anmeldung: 13.08.1997
(73) Patentinhaber: Bayerische Motoren Werke Aktiengesellschaft, 80788 München (DE)
(72) Erfinder: Griessbach, Robert, 85635 Höhenkirchen-Siegertsbrunn (DE)

(56) Entgegenhaltungen:
- EP-A- 0 523 602
- EP-A- 0 596 805
- DE-A- 4 301 412
- DE-A- 4 434 571
- DE-U- 9 306 264
- US-A- 4 200 227

## Beschreibung

Die Erfindung bezieht sich auf ein Verfahren mit den Merkmalen des Oberbegriffs von Patentanspruch 1 sowie auf eine Vornchtung zur Durchführung des Verfahrens.

Durch die elektronische Wegfahrsicherung, die seit Anfang 1995 auch in den Fahrzeugen der Anmelderin eingesetzt wird, besteht eine deutliche Verbesserung des Diebstahlschutzes gegenüber dem früheren Zustand, der durch die Verwendung allein eines mechanischen Schlüssels gekennzeichnet war. Dabei tntt jedoch ein neues Problem auf. Erfahrungsgemäß ist es nicht auszuschließen, daß die elektronische Wegfahrsicherung fehlerhafterweise unwirksam ist. Der berechtigte Benutzer des Kraftfahrzeugs kann diesen Zustand in der Regel nicht erkennen. Da er das Kraftfahrzeug weiter wie gewohnt benutzen kann und er in keiner Weise benachteiligt ist, hat er keinerlei Veranlassung oder Möglichkeit, diese Fehlfunktion zu erkennen. Damit aber ist die Situation identisch mit der, wie sie vor Einführung der elektronischen Wegfahrsicherung bestand.

Die Merkmale des Oberbegriff des Anspruchs 1 sind aus der DE 4 301 412 bekannt.

Der Erfindung liegt die Aufgabe zugrunde, ein Verfahren der eingangs genannten Art zu verbessern.

Die Erfindung löst die Aufgabe durch die Merkmale des Patentanspruchs 1.

Aufgrund der eingeschränkten Nutzungsmöglichkeiten erkennt der Benutzer den nicht ordnungsgemäßen Zustand des Kraftfahrzeugs und wird umgehend für die Wiederherstellung des Normalzustands sorgen.

Neben der Möglichkeit einer Fehlfunktion besteht auch die Gefahr einer bewußten Manipulation der elektronischen Wegfahrsicherung. Werden Transponder und mechanischer Schlüssel voneinander getrennt und der Transponder in Reichweite der fahrzeuginternen Leseeinrichtung angeordnet, so ist es bisher möglich, das Kraftfahrzeug mit dem mechanischen Schlüssel oder mit Hilfe einer zusätzlichen Fernbedienung zu verschließen. Ebenso ist es möglich, das Kraftfahrzeug auf diesem Wege wieder zu öffnen und, da die elektronische Wegfahrsicherung unwirksam ist, in Betrieb zu nehmen. Hierzu ist es lediglich erforderlich, eine Kopie des mechanischen Schlüssels anzufertigen, die es ermöglicht, das Kraftfahrzeug anstelle des rechtmäßigen Besitzers in Gebrauch zu nehmen. Diese Gefahr besteht besonders bei Kraftfahrzeugen mit häufig wechselnden Benutzern, wie es beispielsweise bei Fahrzeugen einer Autovermietung der Fall ist.

Um auch in diesem Fall die Benutzung des Kraftfahrzeugs zu erschweren, wird das Abschließen des Kraftfahrzeugs solange nicht möglich, wie sich der Transponder in Reichweite der fahrzeuginternen Lesevorrichtung befindet. Der berechtigte Benutzer ist durch diese Maßnahme in keiner Weise eingeschränkt, da er den Transponder stets mit dem mechanischen Schlüssel entfernt. Die elektronische Wegfahrsicherung wird dann wirksam und verhindert den Fahrzeugdiebstahl. Für den berechtigten Benutzer ergibt sich darüber hinaus der Vorteil, daß er an den versehentlich im Fahrzeuginnen vergessenen SchlÛssel erinnert wird. Diese Funktionalität entspricht dann der, wie sie aus der US 4, 223, 296 A bekannt ist. Dort ist vorgesehen, das Abschließen der Fahrzeugtüren solange zu verhindern, wie der Fahrzeugschlüssel im Zündschloß steckt. Zusätzlich wird er durch die Erfindung darauf aufmerksam gemacht, daß die elektronische Wegfahrsicherung unwirksam ist und er veranlaßt wird, der Ursache (Fehlfunktion oder Manipulation) nachzugehen. Dieser Anlaß besteht dann, wenn er im Besitze des mechanischen Schlüssels ist oder er sich in diesem Besitz erwähnt.

Um im Falle der Manipulation das Auffinden des Transponders zu ermöglichen, sieht eine Weiterbildung der Erfindung vor, ein Auslesen des Transponders nur dann zu ermöglichen, wenn er sich in unmittelbarer Nähe der fahrzeuginternen Lesevorrichtung befindet. Der Fahrzeugbesitzer braucht nur in diesem Bereich nachzusehen. Er wird dann den Transponder ohne weiteres entdecken.

Durch die Erfindung wird die "normale" Nutzung des Kraftfahrzeugs sehr eingeschränkt, da beispielsweise im Falle einer Manipulation ein Versperren (Verriegeln und/oder Sichern) des Kraftfahrzeugs nicht möglich ist.

Voraussetzung ist eine elektrische und/oder mechanische Verbindung zwischen Transponder und Schlüssel. Wird diese gelöst, so ist der Transponder unbrauchbar und damit insbesondere eine Deaktivierung der elektronischen Wegfahrsicherung nicht mehr möglich.

Realisierungsmöglichkeiten hierzu bestehen sowohl in mechanischer als auch in elektrischer Hinsicht. Nachstehend werden vorteilhafte Ausgestaltungen beispielhaft angegeben.

Die Erfindung besteht darin, den Transponder bei der Entnahme aus dem Schlüssel mechanisch zu zerstören und zwischen Transponder und Schlüssel eine Sollbruchstelle vorzusehen, die bei der Entfernung des Transponders zu dessen mechanischer Zerstörung führt. Konstruktiv kann diese Sollbruchstelle in Form von umlaufenden Kerben auf dem Transpondergehäuse gestaltet sein. Wird versucht, einen im Schlüsselkopf beispielsweise eingeklebten Transponder mit einem Werkzeug aus dem Schlüsselkopf zu hebeln, wird der Transponder an der eingekerbten Stelle brechen und damit zerstört.

Ergänzend kann vorgesehen sein den Transponder nicht nur auf mechanischem Wege unbrauchbar zu machen, sondern dies auch mit elektrischen Mitteln zu erreichen. Eine besonders einfache Möglichkeit hierzu läßt sich mit Hilfe einer elektrischen Leitung zwischen Transponder und Schlüssel realisieren, die bei der Entfernung des Transponders unterbrochen wird. Diese Leitung kann zusätzlich einen im Schlüssel angeordneten elektrischen Widerstand mit definiertem Wert beinhalten, der für die Funktion des Transponders notwendig ist. Der Widerstand kann dabei im Schlüsselkopf angeordnet sein.

Auch ist es möglich, die elektrische Leitung als Teil einer Windung auszubilden, über die der Datenaustausch zwischen der Leseeinrichtung und dem Transponder erfolgt. Ist die Leitung unterbrochen, so ist damit die Datenübertragung zwischen Transponder und Leseeinrichtung nicht mehr möglich und damit das Ziel erreicht.

## Patentansprüche

1. Verfahren zur Verbesserung des Diebstahlschutzes von Kraftfahrzeugen mit einer elektronischen Wegfahrsicherung, die durch einen mit einem mechanischen Schlüssel verbundenen Transponder mit einem lesbaren Speicher für eine fahrzeugindividuelle Kennung dann aufhebbar ist, wenn der Speicherinhalt der Erwartung entspricht, und die Nutzung des Kraftfahrzeugs eingeschränkt ist, wenn der Transponder sich nicht in der vorgesehenen Lage bezüglich des Schlüssels befindet, **dadurch gekennzeichnet, daß** zwischen Transponder und Schlüssel eine Sollbruchstelle vorgesehen ist, die bei der Entfernung des Transponders zu dessen mechanischer Zerstörung führt.

2. Verfahren nach Anspruch 1, **dadurch gekennzeichnet, daß** ein Abschließen des Kraftfahrzeugs solange nicht möglich ist, wie die elektronische Wegfahrsicherung unwirksam ist.

3. Verfahren nach Anspruch 1 oder 2, **dadurch gekennzeichnet, daß** das Abschließen solange nicht möglich ist, wie sich der Transponder in Reichweite der fahrzeugseitigen Lesevorrichtung befindet.

4. Verfahren nach Anspruch 3, **dadurch gekennzeichnet, daß** der Transponder nur ausgelesen werden kann, wenn er sich in unmittelbarer Nähe des mit dem mechanischen Schlüssel bedienbaren Zünd-Anlaßschalters befindet.

5. Verfahren nach Anspruch 1, **dadurch gekennzeichnet, daß** umlaufende Kerben auf dem im Schlüssel angeordneten Transpondergehäuse als Sollbruchstellen vorgesehen sind.

6. Verfahren nach Anspruch 1, **dadurch gekennzeichnet, daß** der Transponder mit dem Schlüssel über eine elektrische Leitung verbunden ist.

## Claims

1. A method for improving the anti-theft protection of motor vehicles equipped with an electronic immobiliser which can be cancelled by a transponder connected to a mechanical key and having a readable memory for vehicle-specific identification when the memory content corresponds to expectation and the use of the motor vehicle is restricted when the transponder is not in the provided position with respect to the key, **characterised in that** an ideal break point is provided between the transponder and the key, which on removal of the transponder leads to the mechanical destruction thereof.

2. A method according to claim 1, **characterised in that** it is not possible to lock the motor vehicle while the electronic immobiliser is inactive.

3. A method according to claim 1 or 2, **characterised in that** locking is not possible while the transponder is within the range of the reading device on the vehicle side.

4. A method according to claim 3, **characterised in that** the transponder can only be read when it is located in the direct vicinity of the ignition starting switch which can be operated by the mechanical key.

5. A method according to claim 1, **characterised in that** peripheral notches are provided on the transponder housing arranged in the key as ideal break points.

6. A method according to claim 1, **characterised in that** the transponder is connected to the key via an electric line.

## Revendications

1. Procédé pour améliorer la protection anti-vol de véhicules automobiles équipés d'un dispositif électronique d'immobilisation qui peut être neutralisé au moyen d'un transpondeur relié à une clé mécanique et comprenant une mémoire lisible pour une reconnaissance individuelle du véhicule, quand le contenu de la mémoire correspond à ce qui est attendu, l'utilisation du véhicule étant limitée si le transpondeur ne se trouve pas dans la position prévue par rapport à la clé,
**caractérisé en ce qu'**
entre le transpondeur et la clé, est prévue une zone de rupture imposée qui, quand on éloigne le transpondeur de la clé, entraîne la destruction mécanique du transpondeur.

2. Procédé selon la revendication 1,
**caractérisé en ce que**
il est impossible de fermer le véhicule tant que le dispositif électronique d'immobilisation n'est pas actif.

3. Procédé selon la revendication 1 ou 2,
**caractérisé en ce qu'**
il est impossible de fermer le véhicule tant que le transpondeur se trouve dans le rayon d'action du dispositif de lecture à l'intérieur du véhicule.

4. Procédé selon la revendication 3 ou 4,
**caractérisé en ce que**
le transpondeur ne peut être lu que s'il se trouve à proximité immédiate du contacteur de démarrage qui peut être actionné par la clé mécanique.

5. Procédé selon la revendication 1,
**caractérisé en ce qu'**
on prévoit des entailles périphériques sur le boîtier du transpondeur monté dans la clé, comme zones de rupture imposée.

6. Procédé selon la revendication 1,
**caractérisé en ce que**
le transpondeur est relié à la clé par un conducteur électrique.
